# EUROPÄISCHE PATENTSCHRIFT

(11) **EP 1 394 600 B1**
(45) Veröffentlichungstag und Bekanntmachung des Hinweises auf die Patenterteilung: **22.02.2006**
(21) Anmeldenummer: 03103208.9
(22) Anmeldetag: 21.08.2003
(51) Int. Cl.: G03B 21/00, G09F 3/02

(54) **Mehrlagiges Etikett**
Multilayer label
Etiquette multicouche

(30) Priorität: 28.08.2002 DE 10239510
(43) Veröffentlichungstag der Anmeldung: 03.03.2004
(73) Patentinhaber: Schreiner Group GmbH & Co. KG, 85764 Oberschleissheim (DE)
(72) Erfinder: Unglert, Robert, 80637, München (DE)
(74) Vertreter: Kehl, Günther

(56) Entgegenhaltungen:
- WO-A-01/29804
- GB-A- 2 310 418
- US-B1- 6 193 279

## Beschreibung

Die Erfindung betrifft ein mehrlagiges Etikett mit mindestens einem Unteretikett und einem das Unteretikett zumindest teilweise überdeckenden Oberetikett.

Ein Etikett dieser Art ist aus EP 0 946 936 B1 bekannt. Das bekannte Etikett weist eine Folie auf, die vorzugsweise zweimal um ein zu etikettierendes Behältnis geschlagen werden kann. Der Teil der Folie, der dabei unmittelbar auf dem Behältnis aufliegt, ist selbstklebend ausgebildet und weist Ausstanzungen auf, die abnehmbare Belegabschnitte begrenzen. Um zu verhindern, daß die abnehmbaren Belegabschnitte sich dauerhaft mit dem Behältnis verbinden, ist die Folie in dem Bereich der Belegabschnitte mit einem klebstoffabweisenden Folienstück bedeckt, das ebenfalls selbstklebend ausgebildet ist. Zur Herstellung eines solchen Aufbaus müssen zwei vorgestanzte Materialbahnen passergenau zusammenkaschiert werden, wonach die Verbundschicht mit einer Glattschicht bedruckt und erneut einer Stanzung unterzogen werden muß. Die Herstellung ist daher aufwendig.

DE-9108020-U1 offenbart ein mehrlagiges Etikett, das aus einem bedruckbaren Grundblatt so wie einem beideseitig bedruckbaren Zwischenblatt und ebenfalls zweiseitig bedruckbaren Deckeblatt besteht, welche seitlich fest miteinander verbunden sind.

Der Erfindung liegt demgegenüber die Aufgabe zugrunde, ein mehrlagiges Etikett zu schaffen, das einfach herzustellen ist und das mehrere Informationsträgerseiten zur Verfügung stellt.

Diese Aufgabe ist gelöst durch ein mehrlagiges Etikett mit mindestens einem Unteretikett und einem das Unteretikett zumindest teilweise überdeckenden Oberetikett, wobei das mindestens eine Unteretikett an seiner dem Oberetikett abgewandten Seite eine erste Klebeschicht zur Befestigung des mehrlagigen Etiketts an einem zu etikettierenden Gegenstand sowie einen ersten nichtklebenden Bereich in der Weise aufweist, daß ein überwiegend nichtklebendes Blatt gebildet ist, wobei das Oberetikett an seiner dem mindestens einen Unteretikett zugewandten Seite eine zweite Klebeschicht sowie einen zweiten nichtklebenden Bereich in der Weise aufweist, daß ein überwiegend nichtklebendes Blatt gebildet ist, wobei das Oberetikett einen über das Unteretikett vorstehenden Abschnitt und das mindestens eine Unteretikett an seiner dem Oberetikett zugewandten Seite eine erste klebstoffabweisende Schichte aufweist.

Mit dem Etikettenaufbau gemäß der Erfindung wird ein einfach herzustellendes Etikett geschaffen. Oberetikett und Unteretikett werden parallel vorzugsweise in einer Doppelbahn in der üblichen Weise hergestellt, wobei der Textaufdruck kontrolliert werden kann. Nach dem Bedrucken, Stanzen und dem Gitterabzug wird die Bahn in zwei Teile geteilt und die Oberetiketten werden auf die Unteretiketten aufgespendet.

Der Bereich, in dem die erste und die zweite Klebstoffschicht vorgesehen sind, bildet gewissermaßen den Buchrücken eines Heftchens, wobei die erste Klebstoffschicht auf dem unteren oder untersten Etikett für die Verbindung des Heftchens mit dem zu etikettierenden Gegenstand sorgt. Die nichtklebenden Bereiche auf dem Oberetikett und dem Unteretikett oder den Unteretiketten bilden die Blätter des Heftchens, die beidsetig bedruckt werden können. In dem nichtklebenden Bereich des Oberetiketts kann randseitig ein Befestigungsmittel in Form einer kleinen Klebstoffmenge vorgesehen sein, um das Heftchen verschließen zu können. Dennoch ist das Blatt nach dem Öffnen des Heftchens frei beweglich. In diesem Sinne ist die Angabe "überwiegend nichtklebend" im Patentanspruch 1 zu verstehen.

Nach einer vorteilhaften Ausführungsform weist das mindestens eine Unteretikett an seiner dem Oberetikett zugewandten Seite eine erste klebstoffabweisende Schicht auf. Unter einer "klebstoffabweisenden Schicht" ist hier wie im Folgenden eine Oberfläche zu verstehen, auf der ein mit Haftklebstoff beschichtetes Teil vorübergehend haftet, jedoch von dieser klebstoffabweisenden Schicht ohne wesentliche Beeinträchtigung der Klebeeigenschaften des Haftklebstoffs und ohne Beschädigung der klebstoffabweisenden Schicht abgelöst werden kann. Zur Herstellung von klebstoffabweisenden Schichten werden häufig Silikonmaterialen und Lacke verwendet. Die klebstoffabweisenden Schichten können vollflächig homogen sein, sie können jedoch zur Einstellung des Ablöseverhaltens (Releaseverhaltens) auch in Form eines Rasters oder Punktmusters realisiert sein. Das Vorsehen von Zahnungen oder Aussparungen am Rand der Schicht kann für eine bestimmte Festigkeit der Verbindung zu dem mit Haftklebstoff beschichteten Teil sorgen. Durch die klebstoffabweisende Schicht kann erreicht werden, daß die Verbindung des Oberetiketts oder von Teilen desselben mit dem Unteretikett lösbar gestaltet wird, so daß bei Bedarf das Oberetetikett oder auch nur Teile desselben von dem Unteretikett entfernt und an einem anderen Ort festgeklebt werden können. Je nach Anwendungsfall kann vorgesehen sein, daß das entfernbare Teil mit seiner gesamten Klebefläche auf der klebstoffabweisenden Schicht aufliegt, wodurch eine besonders leichte Ablösbarkeit erreicht wird. Es ist jedoch auch möglich, die klebstoffabweisende Schicht kleiner zu machen als die Klebefläche des entfernbaren Teils, so daß dieses an seinem Rand auf einer Folienoberfläche oder einer Schicht aus Druckfarbe oder dergleichen haftet und mit dieser eine vergleichsweise feste Verbindung eingeht, wodurch verhindert wird, dass sich die Ränder des entfernbaren Teils in unerwünschter Weise von selbst von ihrem Untergrund entfernen.

Das mehrlagige Etikett gemäß der Erfindung kann auf jedem beliebig geformten Gegenstand angebracht werden. Nach einer besonders vorteilhaften Weiterbildung der Erfindung ist jedoch vorgesehen, daß das mindestens eine Unteretikett und das Oberetikett eine solche Länge aufweisen, daß eine selbstüberlappende Anordnung auf einem zylindrischen Behältnis möglich ist. Dabei kommt zuerst der Bereich der ersten Klebstoffschicht des Unteretiketts mit dem Behältnis in Berührung und geht mit diesem eine feste Verbindung ein. Die nichtklebenden Bereiche, die die Blätter des Heftchens bilden, werden zunächst lose um das Behältnis geschlagen, bis der vorstehende Abschnitt des Oberetiketts auf einem Teil des Oberetiketts aufliegt und dort mit dem Oberetikett eine vorübergehende, jedoch haltbare Verbindung eingeht, so daß das Heftchen geschlossen ist und das gesamte mehrlagige Etikett stabil mit dem Behältnis verbunden wird.

Vorteilhafterweise ist an der Stelle, an der der vorstehende Abschnitt des Oberetiketts auf diesem aufliegt, eine zweite klebstoffabweisende Schicht vorgesehen, die das Lösen des vorstehenden Abschnitts und somit das Öffnen des Heftchens erleichtert.

Nach einer bevorzugten Ausführungsform der Erfindung weist das Oberetikett Stanzungen im Bereich der zweiten Klebeschicht auf, die so geführt sind, daß durch sie mindestens ein abnehmbarer Belegabschnitt gebildet wird. Unter Stanzungen in diesem Sinne sind Materialschwächungslinien und Trennungslinien aller Art zu verstehen, insbesondere auch Perforationen, parallel geführte Trennungslinien mit Entfernung des Materials im Raum zwischen den beiden Trennungslinien sowie Kombinationen der genannten Maßnahmen. Diese Belegabschnitte, die durch die zweite Klebstoffschicht selbstklebend ausgebildet sind, können bequem abgetrennt und beispielsweise in eine Dokumentationsunterlage eingeklebt werden. Für die leichte Ablösbarkeit sorgt dabei das Vorhandensein der ersten klebstoffabweisenden Schicht auf dem Unteretikett. Das Unteretikett dient somit nicht nur als Blatt des Heftchens, sondern auch als Träger für die lösbare Befestigung des Belegabschnitts oder der Belegabschnitte, wofür nach dem Stand der Technik zwei gesonderte Bestandteile erforderlich waren.

Die Erfindung betrifft auch ein mit einem mehrlagigen Etikett versehenes Behältnis.

Nach einer bevorzugten Ausführungsform weist das Etikett in der Bandlaufrichtung eine Länge auf, die größer ist als der Umfang des Behältnisses.

Nach einer weiteren bevorzugten Ausführungsform ist der Umfang jedoch kleiner als der doppelte Umfang des Behältnisses.

Die Erfindung betrifft darüber hinaus auch ein Verfahren zur Herstellung eines mehrlagigen Etiketts. Gemäß diesem Verfahren werden die Oberetiketten und Unteretiketten parallel vorbereitet und danach werden die Oberetiketten auf die Unteretiketten aufgespendet, woraus sich gegenüber dem bekannten Stand der Technik eine erhebliche Vereinfachung und Kostenreduzierung ergibt.

Die Erfindung wird im Folgenden anhand der in den Figuren schematisch dargestellten Ausführungsbeispiele näher erläutert. Die Zeichnungen sind nicht maßstabsgetreu. Insbesondere sind Schichtdicken zur besseren Anschaulichkeit im Vergleich zu den Längenausdehnungen der Schichten übertrieben groß gezeichnet. Die Angabe "unten" ist nachfolgend für die Seite des Etiketts verwendet, die bei bestimmungsgemäßen Gebrauch einem Gegenstand zugewandt ist, auf dem das Etikett befestigt wird. Entsprechend wird mit "oben" diejenige Seite bezeichnet, die bei bestimmungsgemäßen Gebrauch vom zu etikettierenden Gegenstand abgewandt ist.

In den Zeichnungen zeigt:
- Figur 1:: eine erste Ausführungsform des erfindungsgemäßen mehrlagigen Etiketts im Längsschnitt,
- Figur 2:: das Oberetikett des erfindungsgemäßen mehrlagigen Etiketts in der Draufsicht,
- Figur 3:: das Unteretikett des erfindungsgemäßen mehrlagigen Etiketts in der Draufsicht,
- Figur 4:: das Unteretikett des erfindungsgemäßen mehrlagigen Etiketts in der Ansicht von unten,
- Figur 5:: das Oberetikett des erfindungsgemäßen mehrlagigen Etiketts in der Ansicht von unten
- Figur 6:: das aus Oberetikett und Unteretikett zusammengesetzte mehrlagige Etikett in der Draufsicht,
- Figur 7:: eine zweite Ausführungsform des erfindungsgemäßen Etiketts mit insgesamt drei Lagen im Längsschnitt.

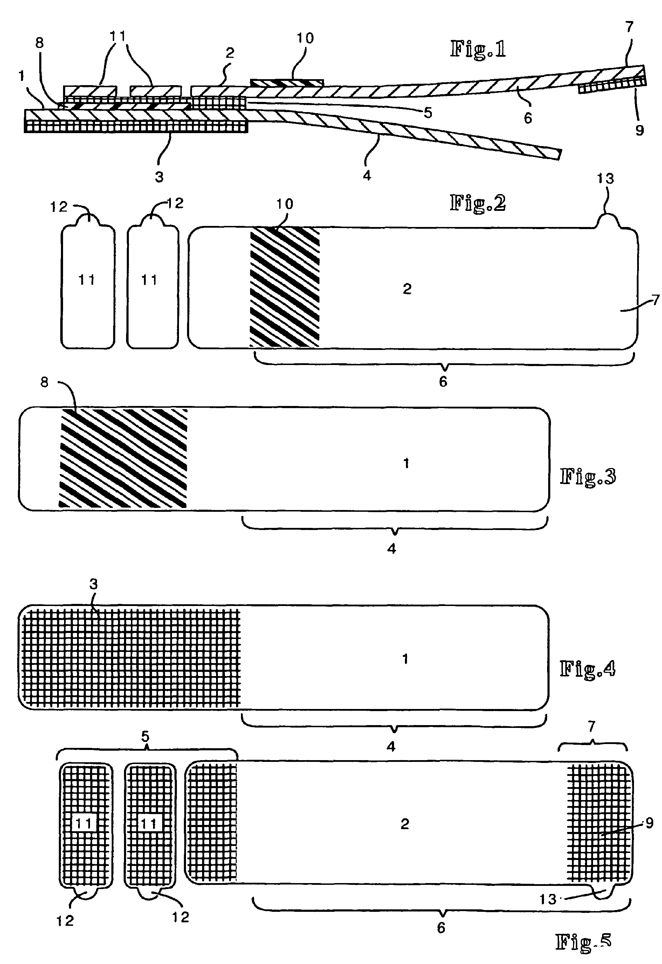

In Figur 1 ist eine erste Ausführungsform des erfindungsgemäßen mehrlagigen Etiketts im Längsschnitt dargestellt. Bezugszeichen 1 bezeichnet ein Unteretikett, das aus einer Lage aus Papier oder Kunststoff besteht. Das Unteretikett 1 ist an seiner Unterseite mit einer ersten Klebeschicht 3 versehen, mit der es beispielsweise auf einem zu etikettierenden Behältnis befestigt werden kann. Ansonsten weist das Unteretikett keine weiteren Klebeschichten auf, insbesondere ist ein erster nichtklebender Bereich 4 vorgesehen, der ein Blatt bildet. Dieses Blatt, das an seiner Oberseite und seiner Unterseite mit Informationen bedruckt sein kann, ist frei beweglich und kann umgeblättert und von beiden Seiten betrachtet werden. An der Oberseite des Unteretiketts befindet sich gegenüber der Klebeschicht 3 eine erste klebstoffabweisende Schicht 8.

Oberhalb des Unteretiketts 1 befindet sich ein Oberetikett 2, das aus einer Lage aus Papier oder Kunststoff besteht. Das Oberetikett 2 ist an seiner Unterseite mit einer zweiten Klebeschicht 5 versehen, mit der es einerseits fest mit dem Unteretikett 1 verbunden ist und andererseits auch die erste klebstoffabweisende Schicht 8 des Unteretiketts 1 bedeckt. An dem gegenüberliegenden Ende des Oberetiketts 2 überragt dieses das Unteretikett 1 um den Abschnitt 7. Im Bereich des Abschnitts 7 ist das Oberetikett 2 unterseitig mit einer Klebstoffschicht 9 versehen, die als Befestigungsmittel dient. Ansonsten weist das Oberetikett keine weiteren Klebeschichten auf, insbesondere ist ein zweiter nichtklebender Bereich 6 vorgesehen, der ein Blatt bildet. Dieses Blatt, das an seiner Oberseite und seiner Unterseite mit Informationen bedruckt sein kann, ist frei beweglich und kann umgeblättert und von beiden Seiten betrachtet werden.

Die nichtklebenden Bereiche des Oberetiketts und des Unteretiketts überdecken sich, so daß sie zwei Blätter eines Heftchens mit vier beschrifteten Seiten bilden, während die erste und die zweite Klebeschicht 3 und 5 sich am entgegengesetzten Ende befinden und gewissermaßen den Buchrücken des Heftchens darstellen.

Das Oberetikett weist ferner an seiner Oberseite eine zweite klebstoffabweisende Schicht 10 auf, die in ihren Abmessungen etwa der Klebstoffschicht 9 entspricht.

Das Oberetikett 2 ist im Bereich der ersten klebstoffabweisenden Schicht 8, die durch die zweite Klebstoffschicht 5 bedeckt wird, durch zwei Querstanzungen unterteilt, so daß sich zwei abnehmbare Belegetiketten 11 bilden. Obwohl die Stanzungen im vorliegenden Beispiel so geführt sind, daß die Belegetiketten vollständig abgetrennt sind, verbleiben diese sicher an ihrem Ort, da sie durch die Wirkung der zweiten Klebstoffschicht 5 auf der ersten klebstoffabweisenden Schicht 8 des Unteretiketts 1 haften. Anders als im vorstehend beschriebenen Beispiel wäre es auch möglich, lediglich eine Perforationsstanzung vorzunehmen, so daß die Belegetiketten 11 entlang einer Reißlinie abzureißen wären.

Im vorstehend beschriebenen Beispiel ist vorgesehen, daß die zweite Klebstoffschicht 5 nicht nur die erste klebstoffabweisende Schicht 8 des Unteretiketts 1 bedeckt, sondern auch diese überragt und somit eine feste und dauerhafte Klebeverbindung zwischen dem Oberetikett 2 und dem Unteretikett 1 hergestellt wird. Abweichend hiervon ist es auch möglich, die erste klebstoffabweisende Schicht 8 des Unteretiketts 1 größer auszulegen, so daß die zweite Klebstoffschicht 5 des Oberetiketts 2 vollständig auf der ersten klebstoffabweisenden Schicht 8 des Unteretiketts 1 aufliegt. In diesem Fall wäre das Oberetikett in seiner Gesamtheit nur lose mit dem Unteretikett verbunden und könnte bequem von diesem abgetrennt werden, um es an einem anderen Ort anzukleben.

Figur 2 zeigt das Oberetikett 2 des erfindungsgemäßen mehrlagigen Etiketts in der Draufsicht. Das Oberetikett 2 ist im Grobumriß rechteckig. Durch Querstanzungen sind zwei Belegabschnitte 11 abgetrennt. Das Bezugszeichen 10 bezeichnet die oben bereits beschriebene zweite Klebstoff abweisende Schicht. Die Längsrichtung des Rechtecks ist mit der Maschinenlaufrichtung bei der maschinellen Fertigung identisch.

In der Figur 2 ist zu erkennen, daß an den beiden abnehmbaren Belegabschnitten 11 jeweils eine etwa halbkreisförmige Lasche 12 angeordnet ist, mit der der Belegabschnitt leicht gegriffen werden kann. Eine ähnliche Lasche 13 befindet sich an der Längsseite des Abschnitts 7. Auch die Lasche 13 dient dazu, das Ergreifen des durch das Oberetikett 2 gebildeten Blattes zum Zwecke des Öffnens des Heftchens zu erleichtern.

Mit der Einschränkung, daß im Bereich des Abschnitts 7 eine kleine Klebstoffschicht 9 vorgesehen ist, ist der Bereich 6 klebstofffrei und stellt ein Blatt dar, das umgeblättert werden kann und mit seinen beiden Seiten als Informationsträger dient.

Figur 3 zeigt das Unteretikett 1 des erfindungsgemäßen mehrlagigen Etiketts in der Draufsicht. Das Unteretikett 1 ist im Grobumriß rechteckig. Es ist etwas schmäler als das Oberetikett 2. Das Bezugszeichen 8 bezieht sich auf die bereits beschriebene erste klebstoffabweisende Schicht 8. Das Bezugszeichen 4 bezieht sich auf den nichtklebenden ersten Bereich, der das zweite umfaltbare Blatt des Heftchens darstellt.

Figur 4 zeigt das Unteretikett 1 des erfindungsgemäßen mehrlagigen Etiketts in der Ansicht von unten. Es ist die erste Klebeschicht 3 und der erste nichtklebende Bereich 4 zu erkennen.

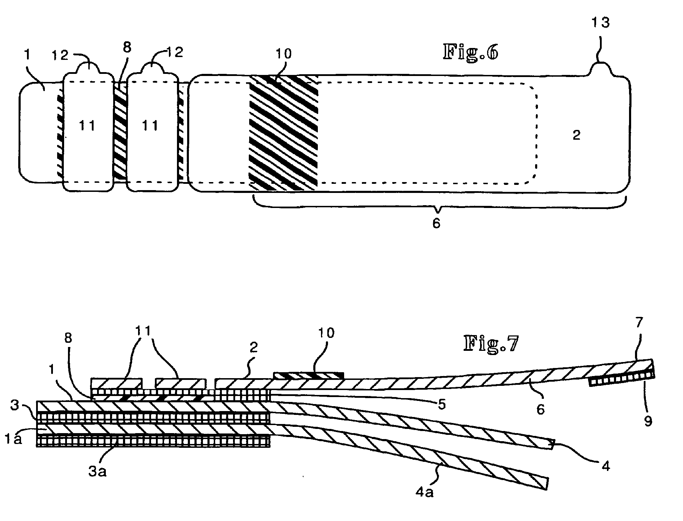

Figur 5 zeigt das Oberetikett 2 des erfindungsgemäßen mehrlagigen Etiketts in der Ansicht von unten. Es ist die zweite Klebeschicht 5 zu erkennen, die sich auf die beiden abnehmbaren Belegabschnitte 11 sowie einen Teil des übrigen Oberetiketts erstreckt. Ferner ist der überwiegend nichtklebende Bereich 6 zu erkennen, der abgesehen von der Klebstoffschicht 9 im Abschnitt 7 nichtklebend ist. Die Laschen 12 der Belegabschnitte 11 sowie die Grifflasche 13 sind nichtklebend, damit vermieden wird, daß der Benutzer beim Anfassen der Laschen mit Klebstoff in Berührung kommt.

Figur 6 zeigt das aus Oberetikett 2 und Unteretikett 1 zusammengesetzte mehrlagige Etikett in der Draufsicht. Der Umriß des durch das Oberetikett 2 verdeckten Unteretiketts 2 ist strichliert angedeutet. In dem gezeigten Ausführungsbeispiel ist das Unteretikett etwas schmäler als das Oberetikett. Das Unteretikett kann auch gleich breit wie das Oberetikett oder sogar breiter sein.

Figur 7 zeigt eine zweite Ausführungsform des erfindungsgemäßen Etiketts mit insgesamt drei Lagen im Längsschnitt. Bei der in Figur 7 gezeigten zweiten Ausführungsform sind zwei identische Unteretiketten 1 und 1a vorgesehen, die beide eine Klebeschicht 3 bzw. 3a aufweisen. Die Klebeschicht 3 dient zur Herstellung der Verbindung zwischen den Unteretiketten 1 und 1a, während die Klebeschicht 3a zur Verbindung des gesamten Etikettenaufbaus mit einem zu etikettierenden Gegenstand dient. Ansonsten ist der Etikettenaufbau der gleiche wie der in Figur 1 gezeigte. Durch das Vorsehen des weiteren Unteretiketts 1a wird ein Heftchen mit insgesamt drei Blättern und sechs Informationsseiten gebildet. Es versteht sich von selbst, daß Ausführungsformen mit noch mehr Unteretiketten möglich sind.

Während nach dem Stand der Technik mehrere Belegabschnitte in mehreren Aufspendevorgängen angebracht wurden, können bei der Erfindung praktisch beliebig viele Belegabschnitte mit einem einzigen Aufspendevorgang angebracht werden. Das Verfahren läuft wie folgt ab:
Die Unteretiketten 4 sind auf einer klebstoffabweisenden in Längsrichtung laufenden ersten Trägerbahn (nicht dargestellt) angeordnet. Eine zweite Trägerbahn (nicht dargestellt) trägt in gleicher Weise die Oberetiketten 6, einschließlich der Belegabschnitte 11. Die zweite Trägerbahn, die oberhalb der ersten Trägerbahn angeordnet ist, läuft synchron (passergenau) zur ersten Trägerbahn und wird über eine Umlenkkante mit kleinem Krümmungsradius gezogen, so daß die sich auf ihr angeordneten Oberetiketten einschließlich der Belegabschnitte der Krümmung bei der Umlenkung nicht folgen, sondern sich von der Trägerbahn abheben. Da die Umlenkkante in unmittelbarer Nähe zur Oberfläche der ersten Trägerbahn angeordnet ist, gelangen die sich von der zweiten Trägerbahn abhebenden Oberetiketten 6 mit ihrer Klebstoffschicht 5 auf die Unteretiketten 4, wo sie durch eine Walze (nicht dargestellt) fortlaufend angedrückt werden, wobei sich dann das aus Figur 1 bzw. aus Figur 7 ersichtliche Verbundetikett ergibt, das auf der ersten Trägerbahn angeordnet ist. Gemäß der Erfindung kann somit ein Oberetikett aus theoretisch beliebig vielen Einzelteilen (Belegabschnitte 11) mit nur einer einzigen Aufspendevorrichtung in einem einzigen Vorgang auf ein Unteretikett aufgespendet werden. Der apparative Aufwand sowie der Arbeitsaufwand bei der Maschineneinstellung zur passergenauen Zuführung der Oberetiketten fällt unabhängig von der Anzahl von Teilen, aus denen das Oberetikett besteht, nur einmal an.

Zur Etikettierung eines Behältnisses wird das erfindungsgemäße Etikett wie folgt verwendet:
Die Etiketten sind in der Regel auf einem Trägerband (nicht dargestellt) angeordnet, das eine klebstoffabweisende Glattschicht aufweist. Die Laufrichtung des Trägerbandes ist dabei parallel zur Längsrichtung des Etiketts. Die Etiketten sind so auf dem Trägerband angeordnet, daß die Bereiche mit den Klebeschichten 3 und 5 in Laufrichtung vorne liegen. Das Trägerband wird nach einer bekannten Technik über eine Ablösekante mit kleinem Krümmungsradius gezogen, die eine Trennung zwischen dem Trägerband und dem Etikett bewirkt. Das über die Ablösekante geradeaus weiterlaufende Etikett gelangt mit einem sich drehenden zylindrischen Behältnis in Kontakt, worauf die Klebeschicht 3 (bei der Ausführungsform gemäß Figur 7 die Klebeschicht 3a) eine Verbindung mit der Manteloberfläche des Behältnisses eingeht.

Da das Etikett eine Länge aufweist, die größer als der Umfang des Behältnisses ist, wird das Etikett bei der Weiterdrehung des Behältnisses um den Außenmantel des Behältnisses geschlagen. Bei der zweiten Umdrehung des Behältnisses kommen die nichtklebenden Bereiche auf die Belegabschnitte 11 zu liegen, bis schließlich die Klebstoffschicht 9 auf die zweite klebstoffabweisende Schicht 10 gelangt und mit dieser eine hinreichend feste Verbindung eingeht, so daß das Etikett sicher an dem Behältnis befestigt ist.

Obwohl die Belegabschnitte 11 durch das Etikett zugedeckt sind, ist das Vorhandensein der Belegabschnitte für den Endverbraucher ohne weiteres ersichtlich, da diese mit den Laschen 12 über den Rand des Etiketts vorstehen. Um an die Informationen auf den inneren Blättern des Etiketts zu gelangen, ergreift der Endverbraucher das Oberetikett 2 an der Grifflasche 13 und hebt den Abschnitt 7 mit seiner Klebstoffschicht 9 von der zweiten klebstoffabweisenden Schicht 10 ab. Die nichtklebenden Bereiche, genauer gesagt die überwiegend nichtklebenden Bereiche 4 und 6, können dann von dem Behältnis abgewickelt und frei entfaltet werden. Dann liegen auch die Belegabschnitte 11 frei und können bei Bedarf von der ersten klebstoffabweisenden Schicht abgehoben werden. Danach können sie in eine Dokumentationsunterlage oder an eine Spritze geklebt werden. Nach dem Studium des Inhalts des aus dem Oberetikett 2 und dem Unteretikett 1 gebildeten Heftchens und gegebenenfalls nach Entnahme eines der Belegetiketten 11 werden Oberetikett 2 und Unteretikett 1 wieder um das Behältnis geschlagen. Schließlich wird die Klebstoffschicht 8 wieder mit der zweiten klebstoffabweisenden Schicht 10 durch Andrücken mit dem Finger verbunden.

## Patentansprüche

1. Mehrlagiges Etikett, mit mindestens einem Unteretikett (1) und einem das Unteretikett zumindest teilweise überdeckenden Oberetikett (2), wobei das mindestens eine Unteretikett (1) an seiner dem Oberetikett (2) abgewandten Seite eine erste Klebeschicht (3) zur Befestigung des mehrlagigen Etiketts an einem zu etikettierenden Gegenstand sowie einen ersten nichtklebenden Bereich (4) in der Weise aufweist, daß ein überwiegend nichtklebendes Blatt gebildet ist, wobei das Oberetikett (2) an seiner dem mindestens einen Unteretikett (1) zugewandten Seite eine zweite Klebeschicht (5) sowie einen zweiten nichtklebenden Bereich (6) in der Weise aufweist, daß ein überwiegend nichtklebendes Blatt gebildet ist, wobei das Oberetikett einen über das Unteretikett vorstehenden Abschnitt (7) und das mindestens eine Unteretikett (1) an seiner dem Oberetikett (2) zugewandten Seite eine erste klebstoffabweisende Schicht (8) aufweist.

2. Mehrlagiges Etikett nach Anspruch 1, bei dem die erste Klebeschicht (3) die zweite Klebeschicht (5) zumindest teilweise überlappt.

3. Mehrlagiges Etikett nach Anspruch 1 oder 2, bei dem der vorstehende Abschnitt (7) am Rand des zweiten nichtklebenden Bereichs (6) angeordnet ist.

4. Mehrlagiges Etikett nach Anspruch 4, bei dem die erste klebstoffabweisende Schicht (8) des mindestens einen Unteretiketts (1) die erste Klebeschicht (3) überlappt.

5. Mehrlagiges Etikett nach einem der vorhergehenden Ansprüche, bei dem der vorstehende Abschnitt (7) des Oberetiketts (2) Befestigungsmittel (9) zur lösbaren Befestigung aufweist.

6. Mehrlagiges Etikett nach einem der vorhergehenden Ansprüche, bei dem das mindestens eine Unteretikett (1) und das Oberetikett (2) eine solche Länge aufweisen, daß eine selbstüberlappende Anordnung auf einem Behältnis möglich ist.

7. Mehrlagiges Etikett nach Anspruch 7, bei dem das Oberetikett (2) an seiner dem Unteretikett (1) abgewandten Seite eine zweite klebstoffabweisende Schicht (10) aufweist.

8. Mehrlagiges Etikett nach einem der vorhergehenden Ansprüche, bei dem das Oberetikett (2) Stanzungen im Bereich der zweiten Klebeschicht (5) aufweist, die so geführt sind, daß durch sie mindestens ein abnehmbarer Belegabschnitt (11) gebildet wird.

9. Mehrlagiges Etikett nach Anspruch 9, bei dem die Stanzungen das Oberetikett (2) vollständig durchtrennen.

10. Mehrlagiges Etikett nach Anspruch 10, bei dem die Stanzungen aus zwei nebeneinander verlaufenden Stanzlinien bestehen und zwischen den Stanzlinien eine materialfreie Lücke besteht, so daß die Belegabschnitte freistehend sind.

11. Mehrlagiges Etikett nach Anspruch 9, bei dem die Stanzungen des Oberetiketts (2) als Perforationen ausgeführt sind.

12. Mehrlagiges Etikett nach einem der Ansprüche 9 bis 12, bei dem an dem mindestens einen Belegabschnitt (11) eine vorstehende Lasche (12) angeordnet ist.

13. Mehrlagiges Etikett nach einem der vorhergehenden Ansprüche, bei dem an dem Oberetikett eine vorstehende Grifflasche (13) angeordnet ist.

14. Mehrlagiges Etikett nach einem der vorhergehenden Ansprüche, bei dem die zweite Klebeschicht (5) eine Flächenausdehnung aufweist, die etwa gleich der Flächenausdehnung der ersten Klebeschicht (3) ist und bei dem die erste und die zweite Klebeschichten sich gegenseitig überdeckend angeordnet sind.

15. Mehrlagiges Etikett nach einem der vorhergehenden Ansprüche, bei dem die erste Klebeschicht (3) und die zweite Klebeschicht (5) durch selektiven Klebstoffauftrag erzeugt sind.

16. Mehrlagiges Etikett nach einem der Ansprüche 1 bis 15, bei dem die erste Klebeschicht (3) und die zweite Klebeschicht (5) dadurch erzeugt sind, daß eine vollflächig mit Klebstoff beschichtete Folie selektiv mit einem die Klebekraft des Klebstoffs örtlich aufhebenden Mittel behandelt ist.

17. Behältnis mit einem mehrlagigen Etikett, welches Etikett folgendes aufweist: mindestens ein Unteretikett (1) und ein das Unteretikett zumindest teilweise überdeckendes Oberetikett (2), wobei das mindestens eine Unteretikett (1) an seiner dem Oberetikett (2) abgewandten Seite eine erste Klebeschicht (3) zur Befestigung des mehrlagigen Etiketts an dem Behältnis sowie einen ersten nichtklebenden Bereich (4) in der Weise aufweist, daß ein überwiegend nichtklebendes Blatt gebildet ist, wobei das Oberetikett (2) an seiner dem mindestens einen Unteretikett (1) zugewandten Seite eine zweite Klebeschicht (5) sowie einen zweiten nichtklebenden Bereich (6) in der Weise aufweist, daß ein überwiegend nichtklebendes Blatt gebildet ist, wobei die erste Klebeschicht (3) die zweite Klebeschicht (5) zumindest teilweise überlappt und das Oberetikett einen über das Unteretikett vorstehenden Abschnitt (7) und das mindestens eine Unteretikett (1) an seiner dem Oberetikett (2) zugewandten Seite eine erste klebstoffabweisende Schicht (8) aufweist.

18. Behältnis mit einem mehrlagigen Etikett nach Anspruch 18, bei dem das mehrlagige Etikett eine Länge aufweist, die größer als der Umfang des Behältnisses ist.

19. Behältnis nach Anspruch 19, bei dem das mehrlagige Etikett eine Länge aufweist, die kleiner als der zweifache Umfang des Behältnisses ist.

20. Verfahren zur Herstellung des mehrlagigen Etiketts nach einem der Ansprüche 1 bis 17, das folgende Schritte, nicht zwingend in der gewählten Reihenfolge, umfaßt:
a) Bereitstellen einer klebstoffabweisenden Trägerbahn,
b) Lokales Bedrucken der Trägerbahn mit Klebstoffkiller,
c) Bedrucken einer Folienbahn mit Text und Motiven,
d) lokales Bedrucken der Folienbahn mit einem klebstoffabweisenden Material,
e) Zusammenlaminieren der bedruckten Trägerbahn mit der Folienbahn,
f) Stanzen der Folienbahn zu Etiketten und Abzug des Restgitters,
g) Teilen der Materialbahn in eine Etikettenbahn für Unteretiketten und eine Etikettenbahn für Oberetiketten,
h) Aufspenden der Oberetiketten auf die Unteretiketten.

21. Verfahren zur Herstellung des mehrlagigen Etiketts nach einem der Ansprüche 1 bis 17, das folgende Schritte, nicht zwingend in der gewählten Reihenfolge, umfaßt:
a) Bereitstellen einer klebstoffabweisenden ersten Trägerbahn und einer klebstoffabweisenden zweiten Trägerbahn,
b) Lokales Bedrucken der ersten und der zweiten Trägerbahn mit Klebstoffkiller,
c) Bedrucken einer Folienbahn für Unteretiketten mit Text und Motiven,
d) lokales Bedrucken der Folienbahn für Unteretiketten mit einem klebstoffabweisenden Material,
e) Zusammenlaminieren der bedruckten ersten Trägerbahn mit der Folienbahn für Unteretiketten,
f) Stanzen der Folienbahn für Unteretiketten zu Etiketten und Abzug des Restgitters,
g) Bedrucken einer Folienbahn für Oberetiketten mit Text und Motiven,
h) lokales Bedrucken der Folienbahn für Oberetiketten mit einem klebstoffabweisenden Material,
i) Zusammenlaminieren der bedruckten zweiten Trägerbahn mit der Folienbahn für Oberetiketten,
j) Stanzen der Folienbahn für Oberetiketten zu Etiketten und Abzug des Restgitters,
k) Aufspenden der Oberetiketten auf die Unteretiketten.

22. Verfahren zur Herstellung des mehrlagigen Etiketts nach einem der Ansprüche 1 bis 17, das folgende Schritte, nicht zwingend in der gewählten Reihenfolge, umfaßt:
a) Bedrucken einer Folienbahn mit Text und Motiven,
b) ggf. lokales Bedrucken der Folienbahn mit einem klebstoffabweisenden Material,
c) Lokales Beschichten der Folienbahn mit Klebstoff,
d) Bereitstellen einer klebstoffabweisenden Trägerbahn,
e) Zusammenlaminieren der Trägerbahn mit der Folienbahn,
f) Stanzen der Folienbahn zu Etiketten und Abzug des Restgitters,
g) Teilen der Materialbahn in eine Etikettenbahn für Unteretiketten und eine Etikettenbahn für Oberetiketten,
h) Aufspenden der Oberetiketten auf die Unteretiketten.

23. Verfahren zur Herstellung des mehrlagigen Etiketts nach einem der Ansprüche 1 bis 17, das folgende Schritte, nicht zwingend in der gewählten Reihenfolge, umfaßt:
a) Bedrucken einer Folienbahn für Oberetiketten mit Text und Motiven,
b) ggf. lokales Bedrucken der Folienbahn für Oberetiketten mit einem klebstoffabweisenden Material,
c) Lokales Beschichten der Folienbahn für Oberetiketten mit Klebstoff,
d) Bedrucken einer Folienbahn für Unteretiketten mit Text und Motiven,
e) lokales Bedrucken der Folienbahn für Unteretiketten mit einem klebstoffabweisenden Material,
f) Lokales Beschichten der Folienbahn für Unteretiketten mit Klebstoff,
g) Bereitstellen einer ersten und einer zweiten klebstoffabweisenden Trägerbahn,
h) Zusammenlaminieren der ersten und zweiten Trägerbahnen jeweils mit der Folienbahn für Oberetiketten und der Folienbahn für Unteretiketten,
i) Stanzen der Folienbahn für Oberetiketten und der Folienbahn für Unteretiketten zu Etiketten und Abzug des Restgitters,
j) Aufspenden der Oberetiketten auf die Unteretiketten.

## Claims

1. A multi-layer label with at least one lower label (1) and an upper label (2) that at least partially covers the lower label, wherein the side of the at least one lower label (1) that faces away from the upper label (2) contains a first adhesive layer (3) for fixing the multi-layer label on an object to be labeled as well as a first non-adhesive region (4) such that a predominantly non-adhesive sheet is formed, wherein the side of the upper label (2) that faces the at least one lower label (1) contains a second adhesive layer (5) and a second non-adhesive region (6) such that a predominantly non-adhesive sheet is formed, and wherein the upper label contains a section (7) that protrudes over the lower label and the side of the at least one lower label (1) that faces the upper label (2) contains a first non-stick layer (8).

2. The multi-layer label according to Claim 1, wherein the first adhesive layer (3) at least partially overlaps the second adhesive layer (5).

3. The multi-layer label according to Claim 1 or 2, wherein the protruding section (7) is arranged on the edge of the second non-adhesive region (6).

4. The multi-layer label according to Claim 4 [sic], wherein the first non-stick layer (8) of the at least one lower label (1) overlaps the first adhesive layer (3).

5. The multi-layer label according to one of the preceding claims, wherein the protruding section (7) of the upper label (2) contains fixing means (9) for being detachably affixed.

6. The multi-layer label according to one of the preceding claims, wherein the at least one lower label (1) and the upper label (2) have such a length that the label can be arranged on a receptacle in a self-overlapping fashion.

7. The multi-layer label according to Claim 7 [sic], wherein the side of the upper label (2) that faces the lower label (1) contains a second non-stick layer (10).

8. The multi-layer label according to one of the preceding claims, wherein the upper label (2) contains punchings in the region of the second adhesive layer (5), and wherein said punchings are configured such that they form at least one removable cover section (11).

9. The multi-layer label according to Claim 9 [sic], wherein the punchings completely cut through the upper label (2).

10. The multi-layer label according to Claim 10 [sic], wherein the punchings consist of two adjacently extending punched lines, and wherein a gap that is free of material lies between the punched lines such that the cover sections are outlined.

11. The multi-layer label according to Claim 9, wherein the punchings of the upper label (2) are realized in the form of perforations.

12. The multi-layer label according to one of Claims 9-12 [sic], wherein a protruding tab (12) is arranged on the at least one cover section (11).

13. The multi-layer label according to one of the preceding claims, wherein a protruding pull-tab (13) is arranged on the upper label.

14. The multi-layer label according to one of the preceding claims, wherein the size of the second adhesive layer (5) is approximately identical to the size of the first adhesive layer (3), and wherein the first and the second adhesive layer are arranged in a mutually overlapping fashion.

15. The multi-layer label according to one of the preceding claims, wherein the first adhesive layer (3) and the second adhesive layer (5) are produced by means of selective adhesive application.

16. The multi-layer label according to one of Claims 1-15, wherein the first adhesive layer (3) and the second adhesive layer (5) are produced by selectively treating a foil that is coated with adhesive over its entire surface with an agent that locally neutralizes the adhesive effect of the adhesive.

17. A receptacle with a multi-layer label, wherein said label comprises:
at least one lower label (1) and an upper label (2) that at least partially covers the lower label, wherein the side of the at least one lower label (1) that faces away from the upper label (2) contains a first adhesive layer (3) for fixing the multi-layer label on an object to be labeled as well as a first non-adhesive region (4) such that a predominantly non-adhesive sheet is formed,
wherein the side of the upper label (2) that faces the at least one lower label (1) contains a second adhesive layer (5) and a second non-adhesive region (6) such that a predominantly non-adhesive-sheet is formed, wherein the first adhesive layer (3) at least partially overlaps the second adhesive layer (5), and wherein the upper label contains a section (7) that protrudes over the lower label and the side of the at least one lower label (1) that faces the upper label (2) contains a first non-stick layer (8).

18. The receptacle with a multi-layer label according to Claim 18, wherein the multi-layer label is longer than the circumference of the receptacle.

19. The receptacle according to Claim 19, wherein the multi-layer label is shorter than twice the circumference of the receptacle.

20. A method for manufacturing the multi-layer label according to one of Claims 1-17, wherein the following steps are carried out, however, not necessarily in the sequence shown:
a) delivering a non-stick carrier strip,
b) locally printing the carrier strip with an adhesive-neutralizing agent,
c) printing a foil strip with text and motifs,
d) locally printing the foil strip with an adhesive-neutralizing agent,
e) laminating the foil strip on the printed carrier strip,
f) punching the foil strip into labels and removing the lattice-shaped waste material,
g) dividing the material strip into a label strip for lower labels and a label strip for upper labels, and
h) individually applying the upper labels on the lower labels.

21. A method for manufacturing the multi-layer label according to one of Claims 1-17, wherein the following steps are carried out, however, not necessarily in the sequence shown:
a) delivering a first non-stick carrier strip and a second non-stick carrier strip,
b) locally printing the first and the second carrier strip with an adhesive-neutralizing agent,
c) printing a foil strip for lower labels with text and motifs,
d) locally printing the foil strip for lower strips with a non-stick material,
e) laminating the foil strip for lower labels on the first printed carrier strip,
f) punching the foil strip for lower labels into labels and removing the lattice-shaped waste material,
g) printing a foil strip for upper labels with text and motifs,
h) if applicable, locally printing the foil strip for upper labels with a non-stick material,
i) laminating the foil strip for upper labels on the second printed carrier strip,
j) punching the foil strip for upper labels into labels and removing the lattice-shaped waste material, and
k) individually applying the upper labels on the lower labels.

22. A method for manufacturing the multi-layer label according to one of Claims 1-17, wherein the following steps are carried out, however, not unnecessarily in the sequence shown:
a) printing a foil strip with text and motifs,
b) if applicable, locally printing the foil strip with a non-stick material,
c) locally coating the foil strip with adhesive,
d) delivering a non-stick carrier strip,
e) laminating the foil strip on the carrier strip,
f) punching the foil strip into labels and removing the latticed-shaped waste material,
g) dividing the material strip into a label strip for lower labels and a label strip for upper labels, and
h) individually applying the upper labels on the lower labels.

23. A method for manufacturing the multi-layer label according to one of Claims 1-17, wherein the following steps are carried out, however, not necessarily in the sequence shown:
a) printing a foil strip for upper labels with text and motifs,
b) if applicable, locally printing the foil strip for upper labels with a non-stick material,
c) locally coating the foil strip for upper labels with adhesive,
d) printing a foil strip for lower labels with text and motifs,
e) locally printing the foil strip for lower labels with a non-stick material,
f) locally coating the foil strip for lower labels with adhesive,
g) delivering a first and a second non-stick carrier strip,
h) respectively laminating the foil strip for upper labels and the foil strip for lower labels on the first and the second carrier strip,
i) punching the foil strip for upper labels and the foil strip for lower labels into labels and removing the lattice-shaped waste material, and
j) individually applying the upper labels on the lower labels.

## Revendications

1. Etiquette à plusieurs couches, comprenant au moins une étiquette inférieure (1) et une étiquette supérieure (2) recouvrant du moins partiellement l'étiquette inférieure, l'au moins une étiquette inférieure (1) comportant, sur sa face détournée de l'étiquette supérieure (2), une première couche adhésive (3) pour la fixation de l'étiquette à plusieurs couches sur un objet à étiqueter ainsi qu'une première zone non adhésive (4) de manière à constituer une feuille majoritairement non adhésive, tandis que l'étiquette supérieure (2) comporte, sur sa face tournée vers l'au moins une étiquette inférieure (1), une deuxième couche adhésive (5) ainsi qu'une deuxième zone non adhésive (6) de manière à former une feuille majoritairement non adhésive, tandis que l'étiquette supérieure présente une section (7) saillant de l'étiquette inférieure et que l'au moins une étiquette inférieure (1) comporte, sur sa face tournée vers l'étiquette supérieure (2), une première couche anti-adhésive (8).

2. Etiquette à plusieurs couches selon la revendication 1, dans laquelle la première couche adhésive (3) chevauche du moins partiellement la deuxième couche adhésive (5).

3. Etiquette à plusieurs couches selon la revendication 1 ou 2, dans laquelle la section saillante (7) est disposée au bord de la deuxième zone non adhésive (6).

4. Etiquette à plusieurs couches selon la revendication 4, dans laquelle la première couche anti-adhésive (8) de l'au moins une étiquette inférieure (1) chevauche la première couche adhésive (3).

5. Etiquette à plusieurs couches selon une des revendications précédentes, dans laquelle la section saillante (7) de l'étiquette supérieure (2) comporte des moyens de fixation (9) permettant une fixation détachable.

6. Etiquette à plusieurs couches selon une des revendications précédentes, dans laquelle l'au moins une étiquette inférieure (1) et l'étiquette supérieure (2) ont une longueur telle qu'une disposition en auto-chevauchement sur un récipient est possible.

7. Etiquette à plusieurs couches selon la revendication 6, dans laquelle l'étiquette supérieure (2) comporte, sur son côté détourné de l'étiquette inférieure (1), une deuxième couche anti-adhésive (10).

8. Etiquette à plusieurs couches selon une des revendications précédentes, dans laquelle l'étiquette supérieure (2) présente, au niveau de la deuxième couche adhésive (5), des découpes qui sont dirigées de manière à constituer au moins une section de document détachable (11).

9. Etiquette à plusieurs couches selon la revendication 8, dans laquelle les découpes divisent totalement l'étiquette supérieure (2).

10. Etiquette à plusieurs couches selon la revendication 9, dans laquelle les découpes sont constituées de deux lignes de découpe s'étendant l'une près de l'autre et il existe entre les lignes de découpe un intervalle sans matière, de sorte que les sections de document sont inoccupées.

11. Etiquette à plusieurs couches selon la revendication 9, dans laquelle les découpes de l'étiquette supérieure (2) sont réalisées sous forme de perforations.

12. Etiquette à plusieurs couches selon une des revendications 9 à 12, dans laquelle une languette saillante (12) est disposée sur l'au moins une section de document (11).

13. Etiquette à plusieurs couches selon une des revendications précédentes, dans laquelle une languette de saisie saillante (13) est disposée sur l'étiquette supérieure.

14. Etiquette à plusieurs couches selon une des revendications précédentes, dans laquelle la deuxième couche adhésive (5) présente une extension de surface qui est approximativement égale à l'extension de surface de la première couche adhésive (3) et dans laquelle la première et la deuxième couches adhésives sont disposées de manière à se recouvrir mutuellement.

15. Etiquette à plusieurs couches selon une des revendications précédentes, dans laquelle la première couche adhésive (3) et la deuxième couche adhésive (5) sont réalisées par application sélective de colle.

16. Etiquette à plusieurs couches selon une des revendications 1 à 15, dans laquelle la première couche adhésive (3) et la deuxième couche adhésive (5) sont réalisées en traitant sélectivement un film enrobé sur toute sa surface de colle à l'aide d'un agent inhibant localement la force de collage de la colle.

17. Récipient pourvu d'une étiquette à plusieurs couches, laquelle étiquette présente les caractéristiques suivantes : au moins une étiquette inférieure (1) et une étiquette supérieure (2) recouvrant du moins partiellement l'étiquette inférieure, l'au moins une étiquette inférieure (1) comportant, sur sa face détournée de l'étiquette supérieure (2), une première couche adhésive (3) pour la fixation de l'étiquette à plusieurs couches sur le récipient ainsi qu'une première zone non adhésive (4) de manière à constituer une feuille majoritairement non adhésive, l'étiquette supérieure (2) comportant, sur sa face tournée vers l'au moins une étiquette inférieure (1), une deuxième couche adhésive (5) ainsi qu'une deuxième zone non adhésive (6) de manière à constituer une feuille majoritairement non adhésive, la première couche adhésive (3) recouvrant du moins partiellement la deuxième couche adhésive (5) et l'étiquette supérieure présentant une section (7) saillant de l'étiquette inférieure et l'au moins une étiquette inférieure (1) comportant, sur sa face tournée vers l'étiquette supérieure (2), une première couche anti-adhésive (8).

18. Récipient pourvu d'une étiquette à plusieurs couches selon la revendication 18, dans lequel l'étiquette à plusieurs couches a une longueur qui est plus grande que la circonférence du récipient.

19. Récipient selon la revendication 18, dans lequel l'étiquette à plusieurs couches a une longueur qui est plus petite que le double de la circonférence du récipient.

20. Procédé de fabrication de l'étiquette à plusieurs couches selon une des revendications 1 à 17, englobant les étapes suivantes, pas obligatoirement dans l'ordre sélectionné :
a) élaboration d'une bande porteuse anti-adhésive,
b) impression locale de la bande porteuse au moyen d'un destructeur de colle,
c) impression d'une bande de film avec du texte et des motifs,
d) impression locale de la bande de film avec un matériau anti-adhésif,
e) assemblage par laminage de la bande porteuse imprimée et de la bande de film,
f) découpe de la bande de film en étiquettes et retrait de la grille résiduelle,
g) division de la bande de matière en une bande d'étiquette pour les étiquettes inférieures et une bande d'étiquette pour les étiquettes supérieures,
b) pose des étiquettes supérieures sur les étiquettes inférieures.

21. Procédé de fabrication de l'étiquette à plusieurs couches selon une des revendications 1 à 17, englobant les étapes suivantes, pas obligatoirement dans l'ordre sélectionné :
a) élaboration d'une première bande porteuse anti-adhésive et d'une deuxième bande porteuse anti-adhésive,
b) impression locale de la première et de la deuxième bande porteuse au moyen d'un destructeur de colle,
c) impression d'une bande de film pour les étiquettes inférieures avec du texte et des motifs,
d) impression locale de la bande de film pour les étiquettes inférieures avec un matériau anti-adhésif,
e) assemblage par laminage de la première bande porteuse imprimée et de la bande de film pour les étiquettes inférieures,
f) découpe de la bande de film pour les étiquettes inférieures en étiquettes et retrait de la grille résiduelle,
g) impression d'une bande de film pour les étiquettes supérieures avec du texte et des motifs,
h) impression locale de la bande de film pour les étiquettes supérieures à l'aide d'une matière anti-adhésive,
i) assemblage par laminage de la deuxième bande porteuse imprimée et de la bande de film pour les étiquettes supérieures,
j) découpe de la bande de film pour les étiquettes supérieures en étiquettes et retrait de la grille résiduelle,
k) pose des étiquettes supérieures sur les étiquettes inférieures.

22. Procédé de fabrication de l'étiquette à plusieurs couches selon une des revendications 1 à 17, englobant les étapes suivantes, pas obligatoirement dans l'ordre sélectionné :
a) impression d'une bande de film avec du texte et des motifs,
b) le cas échéant, impression locale de la bande de film avec une matière anti-adhésive,
c) enrobage local de la bande de film avec de la colle,
d) élaboration d'une bande porteuse anti-adhésive,
e) assemblage par laminage de la bande porteuse et de la bande de film,
f) découpe de la bande de film en étiquettes et retrait de la grille résiduelle,
g) division de la bande de matière en une bande d'étiquette pour les étiquettes inférieures et une bande d'étiquette pour les étiquettes supérieures,
b) pose des étiquettes supérieures sur les étiquettes inférieures.

23. Procédé de fabrication de l'étiquette à plusieurs couches selon une des revendications 1 à 17, englobant les étapes suivantes, pas obligatoirement dans l'ordre sélectionné :
a) impression d'une bande de film pour les étiquettes supérieures avec du texte et des motifs,
b) le cas échéant, impression locale de la bande de film pour les étiquettes supérieures avec une matière anti-adhésive,
c) enrobage local de la bande de film pour les étiquettes supérieures avec de la colle,
d) impression d'une bande de film pour les étiquettes inférieures avec du texte et des motifs,
e) impression locale de la bande de film pour les étiquettes inférieures avec une matière anti-adhésive,
f) enrobage local de la bande de film pour les étiquettes inférieures avec de la colle,
g) élaboration d'une première et d'une deuxième bande porteuse anti-adhésive,
h) assemblage par laminage de la première bande porteuse imprimée respectivement avec la bande de film pour les étiquettes supérieures et la bande de film pour les étiquettes inférieures,
i) découpe de la bande de film pour les étiquettes supérieures et de la bande de film pour les étiquettes inférieures en étiquettes et retrait de la grille résiduelle,
j) pose des étiquettes supérieures sur les étiquettes inférieures.
